# EUROPEAN PATENT APPLICATION

(11) **EP 4 576 315 A1**
(43) Date of publication of application: **25.06.2025**
(21) Application number: 24220944.3
(22) Date of filing: 18.12.2024
(51) Int. Cl.: H01M 10/42, H01M 10/48, H01M 50/211, H01M 50/519

(54) **BATTERY PACK**

(30) Priority: 22.12.2023 CN 202311785664; 01.04.2024 CN 202420659371 U
(71) Applicant: AESC Japan Ltd., Kanagawa, 2520012 (JP)
(72) Inventor: BAO, Wenlai, Kangqiao Town, Pudong New Area Shanghai, 201315 (CN); YANG, Mingping, Kangqiao Town, Pudong New Area Shanghai, 201315 (CN); HE, Yafei, Kangqiao Town, Pudong New Area Shanghai, 201315 (CN); CHEN, Chuanlian, Kangqiao Town, Pudong New Area Shanghai, 201315 (CN); ZHAO, Nianbin, Kangqiao Town, Pudong New Area Shanghai, 201315 (CN); GU, Jianchao, Kangqiao Town, Pudong New Area Shanghai, 201315 (CN); WANG, Xinyu, Kangqiao Town, Pudong New Area Shanghai, 201315 (CN)
(74) Representative: Becker, Eberhard

(57) **Abstract**

A battery pack includes: a casing including a lower case (101); a battery cell stack (102) including multiple pouch battery cells, including two opposite electrode tab sides and side surfaces adjacent to electrode tab sides, and disposed in the lower case (101);; a battery management system (108); a flexible circuit board assembly (200) including a flexible printed circuit board (201); a side plate (104) fixed to the side surface; a connecting assembly (300) including a flexible flat cable (301) and an adapter (303), in which the flexible flat cable (301) is disposed on the side surface and connected and fixed to the side plate (104) through the adapter (303), and the battery management system (108) and the flexible printed circuit board (201) are communicatively connected through the connecting assembly (300).

## Description

### BACKGROUND

### Technical Field

The disclosure relates to the technical field of power batteries, and in particular to a battery pack.

### Description of Related Art

The operating voltage of a single secondary battery is approximately 2.5V to 4.5V. In an electric vehicle or an energy storage system that require large capacity and high voltage output, it is usually necessary to connect multiple battery cells in series and/or in parallel to form a battery module, then connect the battery modules in series and/or in parallel to form a battery pack, and then the battery pack can be further used as an energy system for powering the electric vehicle or as the energy storage system. The quantity and shape of the battery modules used to build the battery pack and the quantity and shape of the battery cells used to form the battery module may be flexibly changed according to actual needs.

In the field of power batteries used in electric vehicles, in order to improve the full-charge endurance and charging speed of the electric vehicles, it is necessary to further enhance the energy density and cooling performance of the battery pack. As a solution to improve the energy density, the CTP (cell to pack) type battery pack omits the step of forming the battery cells into the battery module, and directly integrates the battery cells into the battery pack, thereby eliminating the structural parts and electrical connectors required to form the battery module, so that the space left for the battery cells are increased.

At present, common battery cells are divided into categories such as cylindrical cells, square-shell cells, and pouch cells according to the different structures. The CTP type battery pack using the square-shell cells have been widely used, but the pouch cells still face a series of problems during integration into the CTP type battery pack due to difficulty in withstanding external impacts and the poor assembly properties thereof. In the related art, it is troublesome to directly install the pouch battery cell stack in the battery pack, the space utilization is not high, and thus resulting in a low energy density of the battery pack.

### SUMMARY

In view of the above-mentioned shortcomings of the related art, the purpose of the disclosure is to provide a battery pack, the battery pack has higher space utilization and higher energy density, and is more convenient to install.

To achieve the above-mentioned purpose and other related purposes, the disclosure proposes a battery pack including the following:
A casing is provided, and the casing includes a lower case.

A battery cell stack is provided, the battery cell stack includes a plurality of pouch battery cells and includes two electrode tab sides opposite to each other and side surfaces adjacent to the electrode tab sides, and the battery cell stack is disposed in the lower case.

A thermally conductive structural adhesive is provided, and the battery cell stack and the base plate of the lower case are directly bonded and fixed by the thermally conductive structural adhesive.

A foaming adhesive is provided, and the foaming adhesive is filled and connected between the electrode tab side of the battery cell stack and the lower case.

A battery management system is provided.

A flexible circuit board assembly is provided, and the flexible circuit board assembly includes a flexible printed circuit board.

A side plate is provided, and the side plate is fixed to the side surface of the battery cell stack.

A connecting assembly is provided, the battery management system and the flexible printed circuit board are communicatively connected through the connecting assembly, and the connecting assembly includes the following: at least one flexible flat cable and an adapter are provided, and the at least one flexible flat cable is disposed on the side surface of the battery cell stack and is connected and fixed to the side plate through the adapter.

In an embodiment of the disclosure, the at least one flexible flat cable includes a plurality of flexible flat cables, a quantity of the at least one flexible flat cable is equal to a quantity of the flexible printed circuit boards, and at least a portion of the multiple flexible flat cables are disposed in a stacking manner and connected and fixed to the side plate through the same adapter.

In an embodiment of the disclosure, two adjacent layers of the flexible flat cables are fixed to each other by a backside adhesive.

In an embodiment of the disclosure, the at least one flexible flat cable is disposed corresponding to the side surface of the battery cell stack; the adapter includes a first connecting surface and a second connecting surface, the first connecting surface is fixedly connected to the side plate, and the second connecting surface is fixedly connected to the at least one flexible flat cable.

In an embodiment of the disclosure, the first connecting surface is overlapped on the side plate and fixed to the side plate by a fixing member; and the second connecting surface is fixed to the at least one flexible flat cable by the backside adhesive.

In an embodiment of the disclosure, the connecting assembly further includes first connectors, two ends of each of the flexible flat cables are connected to the first connectors, one of the first connectors at one of the two ends of each of the flexible flat cables is connected to the flexible printed circuit board, and another one of the first connectors at the other end of each of the flexible flat cables is electrically connected to the battery management system.

In an embodiment of the disclosure, the flexible circuit board assembly further includes a second connector, and the flexible printed circuit board is connected to the first connector through the second connector.

In an embodiment of the disclosure, the flexible printed circuit board includes a flexible printed circuit board body, two ends of the flexible printed circuit board body are bent in the same direction to form a fixing portion clamped on the side plate, and the second connector is disposed on the fixing portion and connected to the corresponding first connector.

In an embodiment of the disclosure, an end of each of the flexible flat cables is connected to the second connector on the corresponding flexible printed circuit board, another end of each of the flexible flat cables extends to the battery management system, and the plurality of the flexible flat cables are disposed on the same path in a stacking manner.

In an embodiment of the disclosure, the first connectors on the plurality of flexible flat cables are staggered in an extending direction of the flexible flat cables.

In an embodiment of the disclosure, the battery pack includes a first battery cell stack and a second battery cell stack, one of electrode tab sides of the first battery cell stack faces one of electrode tab sides of the second battery cell stack, the battery management system is located on the other electrode tab side of the first battery cell stack facing away from the second battery cell stack, an end of each of the plurality of flexible flat cables is connected to the corresponding flexible printed circuit board, and another end of each of the plurality of flexible flat cables extends across a side surface of the first battery cell stack and/or a side surface of the second battery cell stack and is electrically connected to the same battery management system.

The disclosure proposes the battery pack, which realizes signal transmission by disposing the connecting assembly including the flexible flat cable in the battery pack, avoiding the use of a low-voltage wiring harness assembly including, for example, a connector, a wire, a terminal, a buckle, and other devices, so that the battery pack is smaller in size and lighter in weight, and the energy density is improved. Multiple layers of flexible flat cables are disposed in an overlapping manner without occupying excess space in the battery pack, and further, the flexible flat cables are fixed by adapters, which can effectively fix the flexible flat cables to prevent shaking during use, thereby improving the space utilization and energy density of the battery pack, and making installation more convenient.

### BRIEF DESCRIPTION OF THE DRAWINGS

In order to more clearly illustrate the technical solution of the embodiments of the disclosure, the following is a brief introduction to the drawings required for describing the embodiments. Certainly, the drawings described below are only some embodiments of the disclosure. For ordinary technicians in this field, other drawings may be obtained based on the drawings without creative work.
FIG. 1 is an exploded view of a battery pack in an embodiment of the disclosure.
FIG. 2 is a schematic structural view of a flexible circuit board assembly in an embodiment of the disclosure.
FIG. 3 is an exploded view of the flexible circuit board assembly in an embodiment of the disclosure.
FIG. 4 is a schematic view of an installation structure of a side of the flexible circuit board assembly in an embodiment of the disclosure.
FIG. 5 is a schematic view of the installation structure of another side of the flexible circuit board assembly in an embodiment of the disclosure.
FIG. 6 is a partial enlarged schematic view of a connector on a flexible printed circuit board in FIG. 5 in an embodiment of the disclosure.
FIG. 7 is a schematic structural view of the flexible circuit board assembly with a temperature sampling terminal in an embodiment of the disclosure.
FIG. 8 is an exploded view of the flexible circuit board assembly with the temperature sampling terminal in an embodiment of the disclosure.
FIG. 9 is a schematic view of the installation structure of the flexible circuit board assembly with the temperature sampling terminal in an embodiment of the disclosure.
FIG. 10 is a partial enlarged schematic view of a fixed structure portion in FIG. 9 in an embodiment of the disclosure.
FIG. 11 is a schematic view of an installation structure of the temperature sampling terminal in an embodiment of the disclosure.
FIG. 12 is a schematic structural view of the flexible circuit board assembly in another embodiment of the disclosure.
FIG. 13 is an exploded view of the flexible circuit board assembly in another embodiment of the disclosure.
FIG. 14 is a schematic view of the installation structure of the flexible circuit board assembly in another embodiment of the disclosure.
FIG. 15 is a top view of the flexible circuit board assembly in another embodiment of the disclosure.
FIG. 16 is a partial enlarged schematic view of the installation structure of the temperature sampling terminal in FIG. 15 in another embodiment of the disclosure.
FIG. 17 is a schematic structural view of a connecting assembly in an embodiment of the disclosure.
FIG. 18 is a schematic view of an installation structure of the connecting assembly in an embodiment of the disclosure.
FIG. 19 is an exploded view of the connecting assembly in an embodiment of the disclosure.
FIG. 20 is a top view of the connecting assembly in an embodiment of the disclosure.
FIG. 21 is a partially enlarged schematic view of the fixing of an adapter in the connecting assembly in FIG. 20 in an embodiment of the disclosure.

### DESCRIPTION OF THE EMBODIMENTS

The following describes the implementation of the disclosure through specific examples. Persons skilled in the art may easily understand other advantages and effects of the disclosure from the contents disclosed in this specification. The disclosure may also be implemented or applied through other different specific implementation methods, and the details in this specification may also be modified or changed in various ways based on different viewpoints and applications without departing from the spirit of the disclosure.

It should be noted that the views provided in this embodiment are only used to schematically illustrate the basic concept of the disclosure, the drawings only show components related to the disclosure rather than the quantity, shape, and size of components in actual implementation. In actual implementation, the type, quantity, and proportion of each component may be changed arbitrarily, and the component layout may also be more complicated.

In recent years, new energy vehicles have developed rapidly and become more and more popular, which has also accelerated the replacement of related components and technologies. As an important part of new energy vehicles, power battery systems have higher and higher requirements on product performance, safety, and cost under fierce market competition. The power battery system being an important component of the new energy vehicles, the battery power system mainly includes a battery pack formed by connecting several single battery cells in series and in parallel, which may provide a power source for the normal driving of the vehicle.

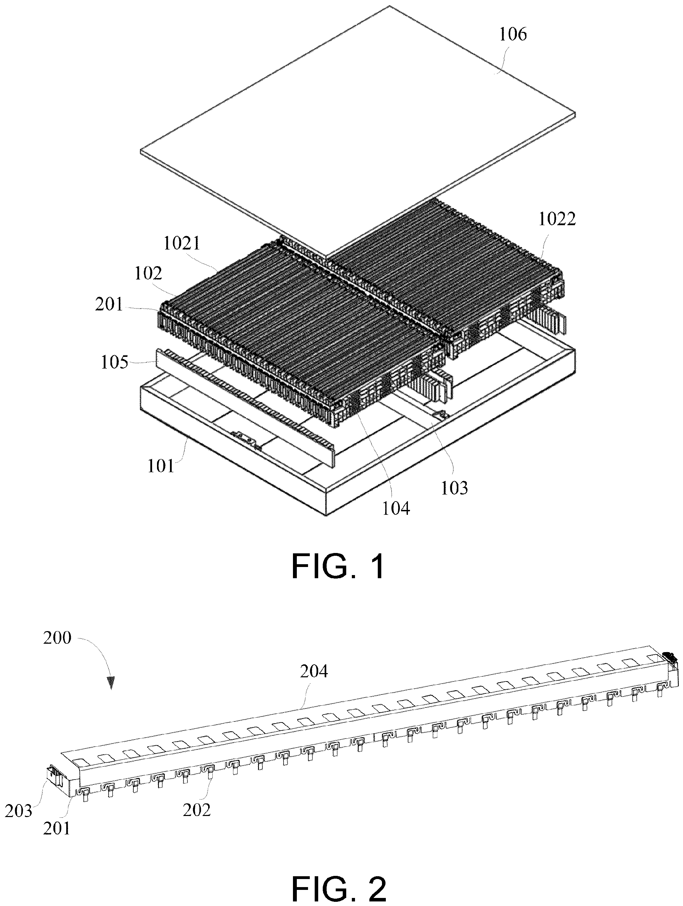

Please refer to FIG. 1. In an embodiment of the disclosure, the battery pack includes: a casing, a battery cell stack 102, a thermal conductive structural adhesive, a foaming adhesive 105, and a flexible circuit board assembly 200. The casing includes a lower case 101, the battery cell stack 102 includes a plurality of pouch battery cells, and includes two electrode tab sides opposite to each other and side surfaces adjacent to the electrode tab sides. The battery cell stack 102 is disposed in the lower case 101, and the battery cell stack 102 and a base plate of the lower case 101 are bonded and fixed directly by the thermally conductive structural adhesive, in other words, the battery cell stack 102 and the base plate of the lower case 101 are directly bonded and fixed by the thermally conductive structural adhesive. The foaming adhesive 105 is filled and connected between the electrode tab side of the battery cell stack 102 and the lower case 101, and the foaming adhesive 105 is formed by foaming, expanding and curing polyurethane and other materials. The flexible circuit board assembly 200 includes: a flexible printed circuit board 201 and an insulating connection piece, in which the flexible printed circuit board 201 is connected and fixed on the battery cell stack 102 through the insulating connection piece; in the embodiment, the thickness and volume occupied of the insulating connection piece are smaller than the conventional bracket for connecting and fixing the flexible printed circuit board 201. That is, the battery pack includes the lower case 101 and the battery cell stack 102 disposed in the lower case 101, and the battery cell stack 102 is orderly disposed in the lower case 101. A chamber may be formed between the lower case 101 and an upper cap 106 on the top of the battery cell stack 102, providing a closed accommodation space for the battery cell stack 102. Each battery cell stack 102 includes the plurality of pouch battery cells, and the plurality of pouch battery cells are stacked in sequence in a thickness direction of the battery cells to form the battery cell stack 102. When manufacturing the battery pack, the quantity of the battery cell stacks 102 in each battery pack may be set according to user requirements. The higher the power supply capacity requirement of the battery pack, the more battery cell stacks 102 need to be disposed in the lower case 101.

Please refer to FIG. 1. In an embodiment of the disclosure, two battery cell stacks 102 are disposed in the lower case 101, which are a first battery cell stack 1021 and a second battery cell stack 1022, one of electrode tab sides of the first battery cell stack 1021 faces one of electrode tab sides of the second battery cell stack 1022. The two battery cell stacks 102 are separated by a casing middle beam 103. The foaming adhesive 105 is disposed on two sides of the battery cell stack 102 and is located between the battery cell stack 102 and the lower case 101. Specifically, the foaming adhesive 105 may be disposed between a side of the battery cell stack 102 where the electrode tab is disposed and an edge beam of the lower case 101 and between the side of the battery cell stack 102 where the electrode tab is disposed and the casing middle beam 103. The battery cell stack 102 and the base plate of the lower case 101 are directly bonded and fixed to by the thermally conductive structural adhesive. In the lower case 101, and located on the two sides of the battery cell stack 102, side plates 104 are further disposed. That is, the side plates 104 are located on the side surfaces of the battery cell stack 102, which are the side surfaces adjacent to the electrode tab sides of the battery cell stack 102. In other words, the side plate 104 is located on the side surface of the battery cell stack 102 which is perpendicular to the casing middle beam 103, and the side plate 104 may be clamped by a fixture to compress the battery cell stack 102 to a predetermined size and then placed into the lower case 101.

Please refer to FIG. 1 and FIG. 2. In an embodiment of the disclosure, a flexible circuit board assembly 200 is further disposed in the battery pack. The flexible circuit board assembly 200 includes a flexible printed circuit board 201, a sampling piece 202, a second connector 203, and the insulating connection piece. In this embodiment, the insulating connection piece is a plastic piece 204, and the flexible printed circuit board 201 is fixedly connected to the battery cell stack 102 through the insulating connection piece; specifically, the plastic piece 204 may be made of materials such as polyethylene glycol terephthalate (PET) or polycarbonate (PC). In the embodiment, one flexible printed circuit board 201 is respectively disposed on the two electrode tab sides of each battery cell stack 102, and information such as the voltage, temperature, and current output of the battery cell stack 102 may be monitored in real time.

Please refer to FIG. 2, FIG. 3, and FIG. 4. In an embodiment of the disclosure, the flexible printed circuit board 201 is in the form of a bendable piece, the flexible printed circuit board 201 includes a flexible printed circuit board body 2011, the flexible printed circuit board body 2011 may be located on the electrode tab side of the battery cell stack 102, and the flexible printed circuit board body 2011 is attached to the electrode tab side of the battery cell stack 102. In the disclosure, two ends of the flexible printed circuit board body 2011 are bent in the same direction to form fixing portions 2012 at two ends of the flexible printed circuit board body 2011, and the fixing portions 2012 may be clamped on the side plate 104. When the flexible printed circuit board 201 is installed on the battery cell stack 102, the flexible printed circuit board body 2011 is attached to the electrode tab side of the battery cell stack 102 close to the foaming adhesive 105, and the fixing portions 2012 at the two ends of the flexible printed circuit board body 2011 are attached to side surfaces of the battery cell stack 102 close to the side plate 104.

Please refer to FIG. 2. In an embodiment of the disclosure, the insulating connection piece includes: the plastic piece 204. On each flexible printed circuit board 201, the plurality of sampling pieces 202 are disposed, the plurality of sampling pieces 202 are distributed along a stacking direction of the pouch battery cells, and the plurality of sampling pieces 202 are welded side by side on the flexible printed circuit board 201. The plurality of sampling pieces 202 are located on a side of the flexible printed circuit board body 2011, and another side of the flexible printed circuit board body 2011 is adhered to the plastic piece 204, that is, the flexible printed circuit board body 2011 is bonded and fixed to the plastic piece 204, and then the plastic piece 204 is further bonded and fixed to the battery cell stack 102. The quantity of the sampling pieces 202 is equal to the quantity of the pouch cells in each cell stack 102. When the flexible printed circuit board 201 is installed on the electrode tab side of the cell stack 102, the sampling pieces 202 are correspondingly welded and fixed to the electrode tabs on the pouch cells. In the embodiment, the sampling piece 202 may be made of metal, such as a nickel piece.

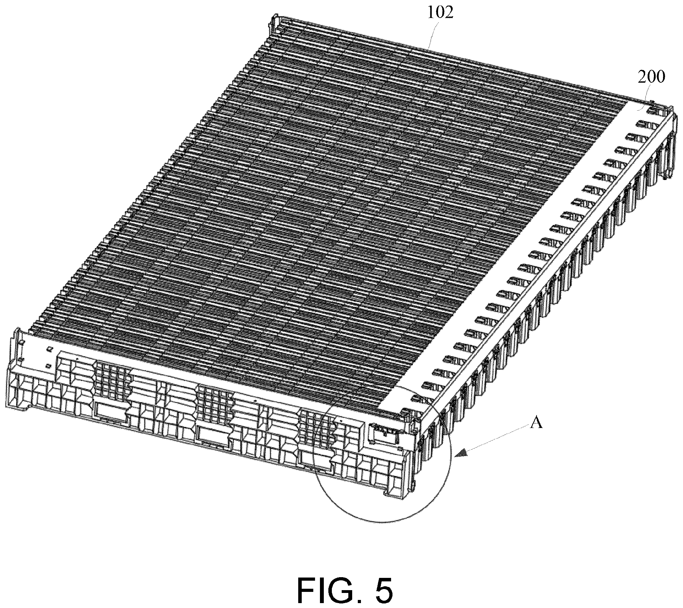

Please refer to FIG. 2, FIG. 5, and FIG. 6. In an embodiment of the disclosure, a second connector 203 is further disposed on the fixing portion 2012 of the flexible printed circuit board 201. Through the second connector 203 and a connecting wire, the flexible printed circuit board 201 and a battery management system 108 are electrically connected. In this way, the monitoring of the pouch battery cells is achieved. When the flexible printed circuit board 201 is installed on the electrode tab side of the battery cell stack 102, the fixing portion 2012 of the flexible printed circuit board 201 is clamped on a buckle 107 of the side plate 104. At this time, the second connector 203 on the fixing portion 2012 is engaged with the buckle 107 on the side plate 104 to limit the position of the flexible printed circuit board 201.

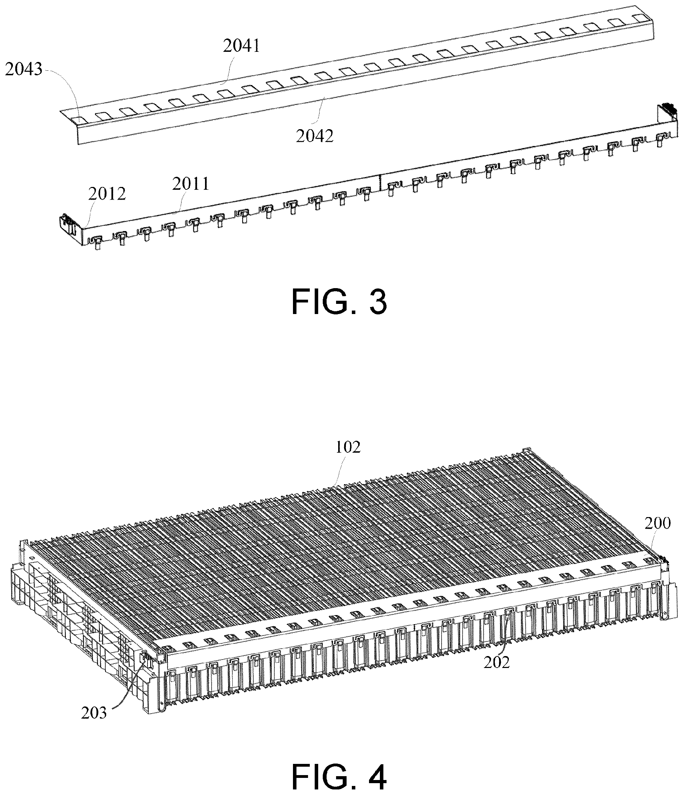

Please refer to FIG. 2 and FIG. 3. In an embodiment of the disclosure, the plastic piece 204 includes a first fixing surface 2041 and a second fixing surface 2042. The first fixing surface 2041 and the second fixing surface 2042 are connected to each other, and the first fixing surface 2041 and the second fixing surface 2042 are arranged at a preset angle. The plastic piece 204 may be made of plastic, and the first fixing surface 2041 and the second fixing surface 2042 are integrally formed. The angle between the first fixing surface 2041 and the second fixing surface 2042 is equal to the angle formed between the upper surface of the battery cell stack 102 and the surface on the electrode tab side, which can ensure that during installation, the first fixing surface 2041 is attached to the upper surface of the battery cell stack 102 and the second fixing surface 2042 is attached to the flexible printed circuit board body 2011 installed on the electrode tab side of the battery cell stack 102 to fix the flexible printed circuit board body 2011. In this embodiment, the first fixing surface 2041 and the second fixing surface 2042 are arranged at a right angle, for example. In the disclosure, the upper surface of the battery cell stack 102 is a surface of the battery cell stack 102 facing the upper cap 106.

Please refer to FIG. 2 and FIG. 3. In an embodiment of the disclosure, a plurality of first openings 2043 are further disposed on the first fixing surface 2041 of the plastic piece 204. The plurality of first openings 2043 are arranged side by side on the first fixing surface 2041, and the first openings 2043 are close to the connection between the first fixing surface 2041 and the second fixing surface 2042. The quantity of the first openings 2043 is equal to the quantity of the sampling pieces 202, and the first openings 2043 and the sampling pieces 202 are disposed correspondingly. When the sampling piece 202 is welded to the electrode tab, the tooling may enter from the first opening 2043. The disclosure does not limit the shape and size of the first opening 2043. The first opening 2043 may be formed to allow the tooling to enter during welding. The first opening 2043 may be configured to be rectangular, circular, elliptical, or any other shape.

Please refer to FIG. 3. In an embodiment of the disclosure, a backside adhesive (not shown) is disposed on the first fixing surface 2041 and the second fixing surface 2042 and located on inner sides of the bending places of the first fixing surface 2041 and the second fixing surface 2042. The backside adhesive is a double-sided adhesive, which adheres and fixes the first fixing surface 2041 of the plastic piece 204 to the upper surface of the battery cell stack 102, and adheres and fixes the second fixing surface 2042 of the plastic piece 204 to the flexible printed circuit board 201.

Please refer to FIG. 2 to FIG. 6. In an embodiment of the disclosure, when installing the flexible circuit board assembly 200, the plurality of sampling pieces 202 are welded on a side of the flexible printed circuit board 201, the second connector 203 is assembled on the fixing portion 2012 of the flexible printed circuit board 201, and the second fixing surface 2042 of the plastic piece 204 is fixed to the flexible printed circuit board body 2011 by the backside adhesive. After the flexible circuit board assembly 200 is assembled, the flexible circuit board assembly 200 is installed on the battery cell stack 102. Specifically, first, the first fixing surface 2041 of the plastic piece 204 is fixed to the upper surface of the battery cell stack 102 by the backside adhesive. Afterward, the sampling piece 202 is welded to the electrode tab of each pouch battery cell on the battery cell stack 102 through the first opening 2043. Finally, the fixing portion 2012 of the flexible printed circuit board 201 is clamped through the opening on the side plate, and the second connector 203 on the fixing portion 2012 is engaged with the buckle 107 on the side plate.

Please refer to FIG. 3 and FIG. 7 to FIG. 11. In an embodiment of the disclosure, the battery pack further includes: a temperature sampling terminal 205 and a fixing plate 207, in which the temperature sampling terminal 205 is connected and fixed to the battery cell stack 102 by the fixing plate 207. In order to collect the temperature of each pouch battery cell, the temperature sampling terminal 205 is further disposed in the battery pack. The flexible printed circuit board body 2011 is located on the electrode tab side of the battery cell stack 102, the temperature sampling terminal 205 is located on the upper surface side of the battery cell stack 102, and the temperature sampling terminal 205 is electrically connected to the flexible printed circuit board 201. In the disclosure, the flexible printed circuit board 201 further includes a plurality of extension structures 2013, the extension structures 2013 are connected to the flexible printed circuit board body 2011, that is, two ends of the extension structures 2013 are respectively connected to the flexible printed circuit board body 2011 and the temperature sampling terminal 205. The position of the extension structure 2013 may be limited according to the collection requirements and the overall structure of the battery pack. In the embodiment, the plurality of extension structures 2013 are arranged side by side on a plane where the first fixing surface 2041 of the plastic piece 204 is located or disposed on the upper surface of the battery cell stack 102. Also, an end of the extension structure 2013 is connected to the flexible printed circuit board body 2011, and another end is connected to the temperature sampling terminal 205. In addition, a reinforcing plate 206, the temperature sampling terminal 205, and the fixing plate 207 are disposed in the flexible circuit board assembly 200. The fixing plate 207 may be pressed onto the extension structure 2013 and/or the reinforcing plate 206 and attached to the upper surface of the battery cell stack 102.

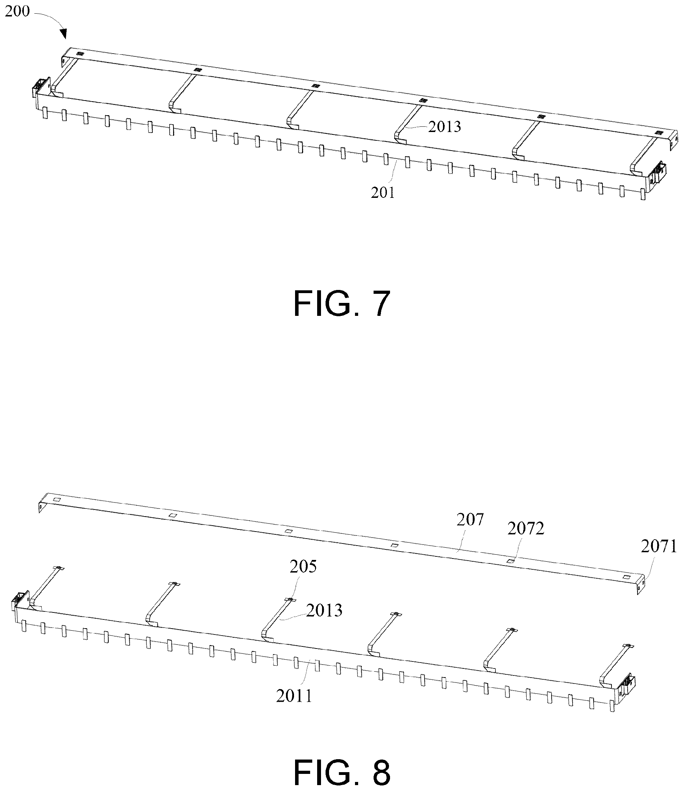

Please refer to FIG. 7 to FIG. 9. In an embodiment of the disclosure, the temperature sampling terminal 205 is connected to the flexible printed circuit board 201 and is located at another end of the extension structure 2013. The temperature sampling terminal 205 is in contact with the pouch battery cells in the battery cell stack 102, collects the temperature of the pouch battery cells, and transmits to the battery management system 108 through the flexible printed circuit board 201, thereby the monitoring of the temperatures of the pouch battery cells is achieved, and safe operation of the system is ensured.

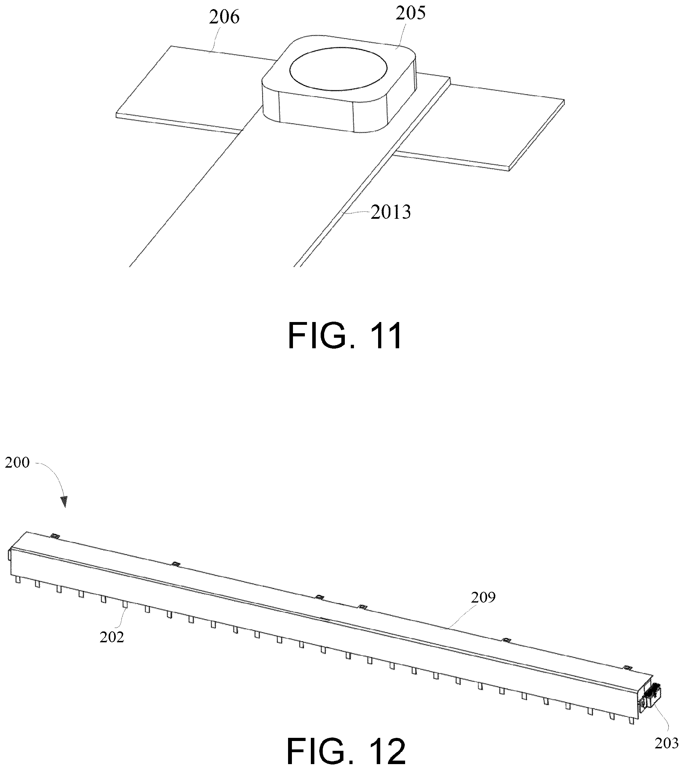

Please refer to FIG. 8 and FIG. 11. In an embodiment of the disclosure, the reinforcing plate 206 is disposed on the extension structure 2013 of the flexible printed circuit board 201. The reinforcing plate 206 is disposed at an end of the extension structure 2013 connected to the temperature sampling terminal 205. The reinforcing plate 206 and the temperature sampling terminal 205 are located on two sides of the extension structure 2013, and the reinforcing plate 206 is close to the pouch battery cell, that is, the reinforcing plate 206 and the temperature sampling terminal 205 are located on two opposite sides of the extension structure 2013, and the reinforcing plate 206 faces the upper surface of the battery cell stack 102. Two ends of the reinforcing plate 206 extend from the temperature sampling terminals 205 to facilitate connection with the fixing plate 207.

Please refer to FIG. 8, FIG. 9, and FIG. 10. In an embodiment of the disclosure, the fixing plate 207 is disposed on the upper surface of the battery cell stack 102 and is placed along a thickness direction of the pouch battery cell. The fixing plate 207 is fixedly connected to the reinforcing plate 206 on a side of each temperature sampling terminal 205, thereby fixing the plurality of temperature sampling terminals 205 on the fixing plate 207. Two ends of the fixing plate 207 are bent toward the same side to form a bent structure 2071. When the fixing plate 207 is installed on the upper surface of the battery cell stack 102, the bent structure 2071 is attached to the two side surfaces of the battery cell stack 102. A through hole is disposed on the bent structure 2071, and a fixing structure 208 may be used to fix and connect the fixing plate 207 to the side plates on the two sides of the battery cell stack 102, so as to fix the multiple temperature sampling terminals 205. That is, the two ends of the fixing plate 207 extend along the stacking direction of the pouch cells in the cell stack 102 and are connected and fixed to the corresponding side plates 104. Specifically, the bent structure 2071 is fixed and connected to the side plate 104. The fixing structure 208 is, for example, a rivet or other fixing structures.

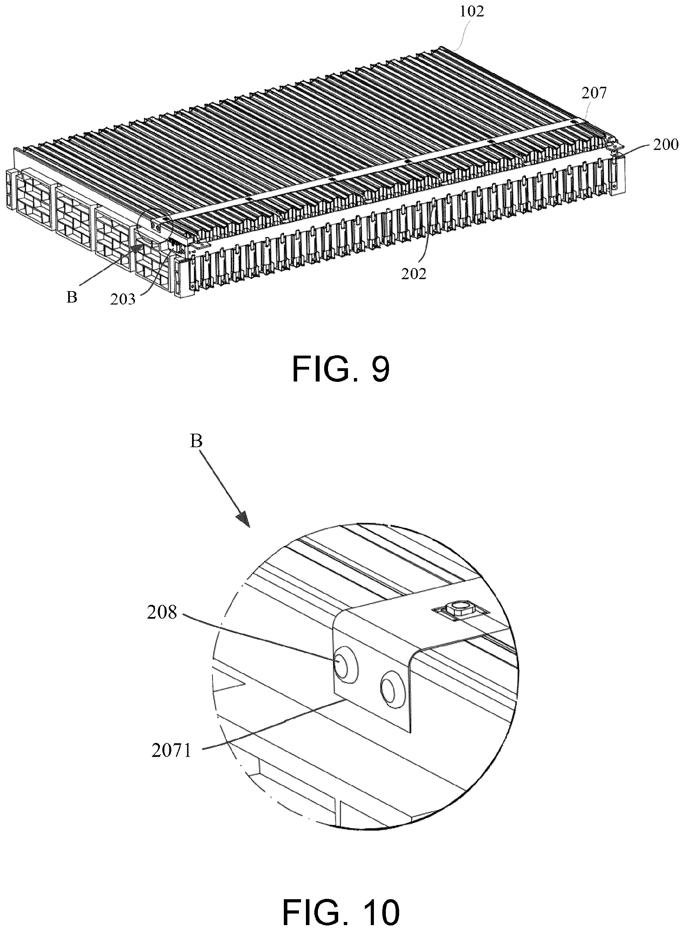

Please refer to FIG. 8 and FIG. 9. In an embodiment of the disclosure, a plurality of second openings 2072 are disposed on the fixing plate 207. The quantity of the second openings 2072 is equal to the quantity of the temperature sampling terminals 205, and the positions of the second openings 2072 are adapted to the positions of the temperature sampling terminals 205. When the fixing plate 207 is placed on the upper surface of the battery cell stack 102, the temperature sampling terminal 205 passes through the second opening 2072 to the surface of the fixing plate 207.

Please refer to FIG. 8 to FIG. 11. In an embodiment of the disclosure, a backside adhesive (not shown) is disposed on the fixing plate 207. On the one hand, the backside adhesive on the fixing plate 207 may be fixed and connected to two sides of the reinforcing plate 206, that is, the fixing plate 207 may be pressed on the reinforcing plate 206, then, the temperature sampling terminal 205 is fixed on the reinforcing plate 206, and the temperature sampling terminal 205 passes through the second opening 2072 on the fixing plate 207 to the surface of the fixing plate 207. On the other hand, after being fixed and connected to the temperature sampling terminal 205, the fixing plate 207 may be fixed and connected to the pouch battery cells by using the backside adhesive on the fixing plate 207, that is, the fixing plate 207 may be attached to the upper surface of the battery cell stack 102.

Please refer to FIG. 7 to FIG. 11. In an embodiment of the disclosure, when installing the flexible circuit board assembly 200, after the sampling piece 202 and the second connector 203 are assembled with the flexible printed circuit board 201, the reinforcing plate 206 and the temperature sampling terminal 205 on the reinforcing plate 206 are assembled on the flexible printed circuit board 201. Then, the fixing plate 207 and the reinforcing plate 206 are fixed and connected by the backside adhesive, and finally the flexible circuit board assembly 200 is installed on the battery cell stack 102. The fixing plate 207 may be fixed to the battery cell stack 102 by the backside adhesive, and the sampling piece 202 may be welded to the electrode tab of each pouch battery cell on the battery cell stack 102. Finally, the fixing portion 2012 of the flexible printed circuit board 201 is clamped through the opening on the side plate 104, and the second connector 203 on the fixing portion 2012 is engaged with the buckle 107 on the side plate.

Please refer to FIG. 12 to FIG. 16. In another embodiment of the disclosure, another flexible circuit board assembly 200 is provided. The insulating connection piece includes: a hot pressing film 209. The sampling piece 202 is fixed on the flexible printed circuit board 201. The hot pressing film 209 includes a first hot pressing film 2091 and a second hot pressing film 2092, at least a portion of the flexible printed circuit board 201 and at least a portion of the sampling piece 202 are pressed between the first hot pressing film 2091 and the second hot pressing film 2092, and the first hot pressing film 2091 and the second hot pressing film 2092 fix and insulate the flexible printed circuit board 201 and the sampling piece 202.

Please refer to FIG. 12 to FIG. 14. In another embodiment of the disclosure, the flexible printed circuit board body 2011 is attached to the upper surface of the battery cell stack 102. The two ends of the flexible printed circuit board body 2011 are bent in the same direction to form the fixing portions 2012 at the two ends of the flexible printed circuit board body 2011. When the flexible printed circuit board 201 is installed on the battery cell stack 102, the flexible printed circuit board body 2011 is attached to the upper surface of the battery cell stack 102, and the fixing portions 2012 at the two ends of the flexible printed circuit board body 2011 is attached to the side surfaces of the battery cell stack 102.

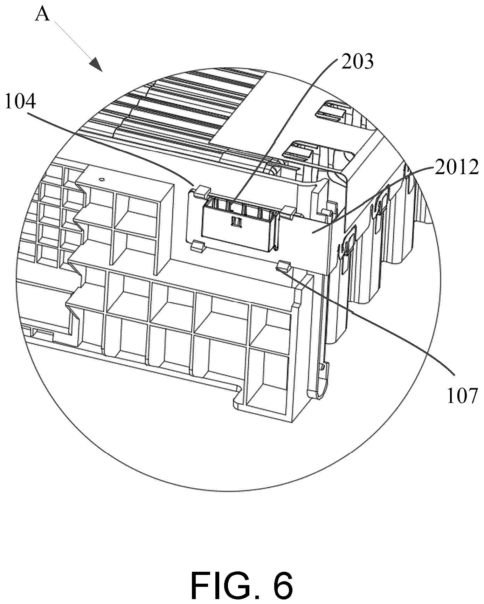

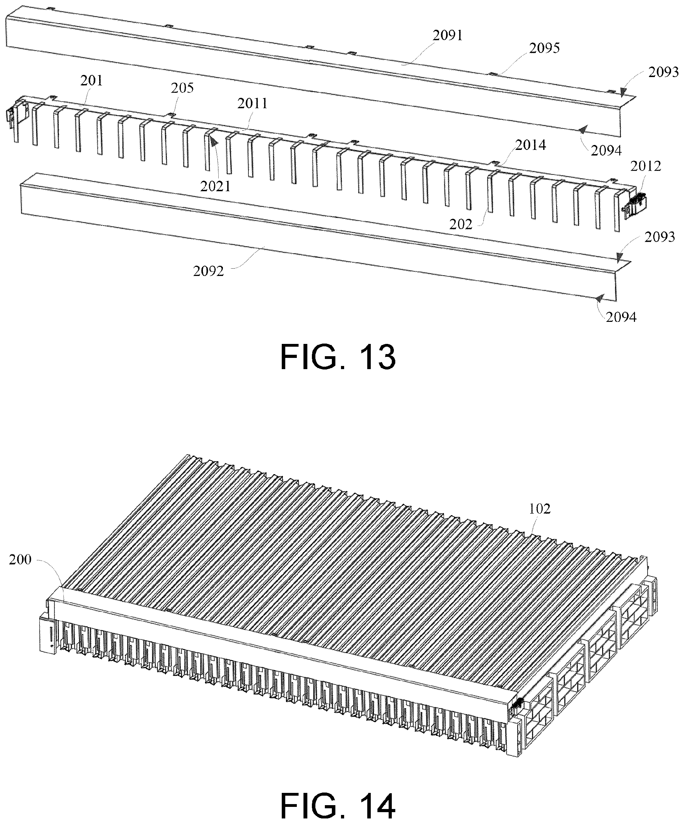

Please refer to FIG. 12 and FIG. 13. In another embodiment of the disclosure, the second connector 203 is further disposed on the fixing portion 2012 of the flexible printed circuit board 201. Through the second connector 203 and the connecting wire, the flexible printed circuit board 201 and the battery management system 108 are electrically connected. In this way, the monitoring of the pouch battery cells is achieved. Together with as shown in FIG. 6, when the flexible printed circuit board 201 is installed on the upper surface of the battery cell stack 102, the fixing portion 2012 of the flexible printed circuit board 201 is clamped on the buckle 107 of the side plate 104. At this time, the second connector 203 on the fixing portion 2012 is engaged with the buckle 107 on the side plate to limit the position of the flexible printed circuit board 201.

Please refer to FIG. 12 to FIG. 14. In another embodiment of the disclosure, the plurality of sampling pieces 202 are disposed on each flexible printed circuit board 201, and the plurality of sampling pieces 202 are welded side by side on the flexible printed circuit board body 2011. The plurality of sampling pieces 202 are located on a side of the flexible printed circuit board body 2011. In the embodiment, the flexible printed circuit board body 2011 is located on the upper surface side of the battery cell stack 102, an end of each sampling piece 202 is fixed and connected to the flexible printed circuit board body 2011, and another end is bent in the same direction to form a vertical portion 2021. When the flexible printed circuit board body 2011 is insulated and attached to the upper surface of the battery cell stack 102 through the hot pressing film 209, a portion of each sampling piece 202 is insulated and attached to the upper surface of the battery cell stack 102 through the hot pressing film 209, and another portion of each sampling piece 202 is insulated and attached to the electrode tab side of the battery cell stack 102 through the hot pressing film 209. Another end of the sampling piece 202 is bent and extended to the position where the electrode tab of the pouch battery cell is located, that is, the vertical portion 2021 extends to the electrode tab side of the battery cell stack 102, and a portion of the vertical portion 2021 extends out of the first hot pressing film 2091 and the second hot pressing film 2092 and is welded and fixed to the electrode tab of the corresponding pouch battery cell. The quantity of the sampling pieces 202 is equal to the quantity of the pouch cells in each battery cell stack 102. When the flexible printed circuit board 201 is installed on the upper surface of the battery cell stack 102, another end of the sampling piece 202 corresponds to the electrode tab on the pouch battery cell. The sampling piece 202 is made of metal, such as a nickel piece.

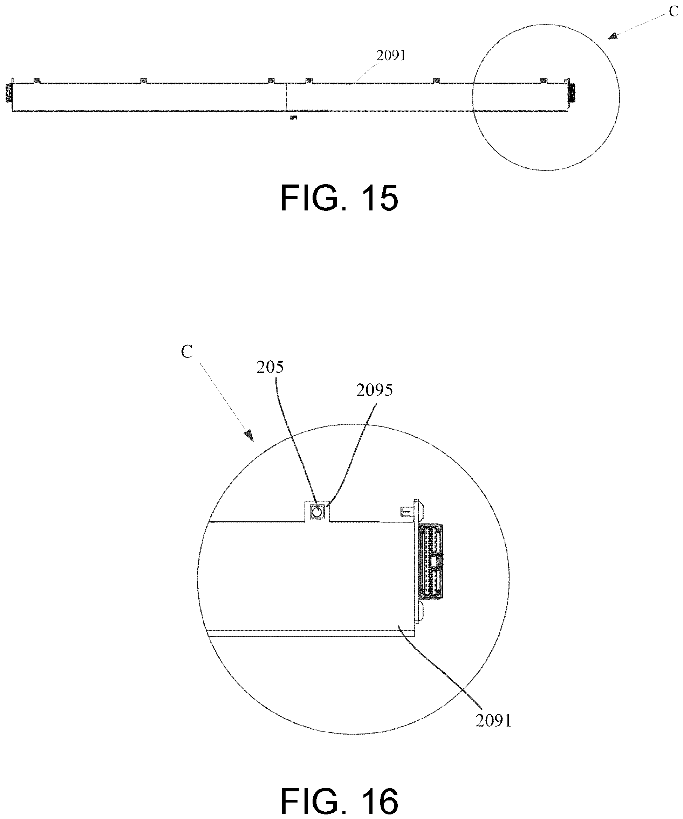

Please refer to FIG. 13 and FIG. 16. In another embodiment of the disclosure, a plurality of first protrusions 2014 are disposed on each flexible printed circuit board 201. The first protrusion 2014 and the sampling piece 202 are located on two opposite sides of the flexible printed circuit board body 2011. The temperature sampling terminal 205 is installed on the first protrusion 2014. The sampling terminal 205 is disposed on the first protrusion 2014 and may detect the temperature of the pouch battery cells. The quantity of the first protrusions 2014 is equal to the quantity of the temperature sampling terminals 205, and the positions of the first protrusions 2014 are disposed corresponding to the positions of the temperature sampling terminals 205, that is, the temperature sampling terminal 205 is disposed on the upper surface of the battery cell stack 102. When the temperature sampling terminal 205 is installed on the first protrusion 2014, the temperature of the pouch battery cell to be sampled may be sampled.

Please refer to FIG. 13 and FIG. 16. In another embodiment of the disclosure, the shapes of the first hot pressing film 2091 and the second hot pressing film 2092 are adapted to the shapes of the flexible printed circuit board 201 and the sampling piece 202. In this embodiment, the first hot pressing film 2091 is disposed on the outer side of the vertical portion 2021 of the sampling piece 202 and the circuit board body 2011, and the second hot pressing film 2092 is disposed on the inner side of the vertical portion 2021 of the sampling piece 202 and the circuit board body 2011. The first hot pressing film 2091 and the second hot pressing film 2092 include a first hot pressing surface 2093 and a second hot pressing surface 2094. The first hot pressing surface 2093 and the second hot pressing surface 2094 are arranged at a preset angle, and the included angle between the first hot pressing surface 2093 and the second hot pressing surface 2094 is equal to both the angle of the vertical portion 2021 on the sampling piece 202 and the angle formed between the upper surface of the battery cell stack 102 and the surface on the electrode tab side. When the first hot pressing film 2091 and the second hot pressing film 2092 are pressed together with the flexible printed circuit board 201 and the sampling piece 202, the edge of the first hot pressing surface 2093 coincides with the edge of the flexible printed circuit board body 2011, and the edge of the second hot pressing surface 2094 exposes another end of the sampling piece 202. In order to protect the temperature sampling terminal 205, a plurality of second protrusions 2095 are disposed on the first hot pressing film 2091. The second protrusion 2095 on the first hot pressing film 2091 corresponds to the first protrusion 2014 on the flexible printed circuit board 201. When the first hot pressing film 2091 is attached to the flexible printed circuit board 201, the second protrusion 2095 on the first hot pressing film 2091 is attached to the first protrusion 2014 on the flexible printed circuit board 201, that is, the first protrusion 2014 is pressed against the second protrusion 2095 so that the temperature sampling terminal 205 may be disposed on the upper surface of the battery cell stack 102, so that the temperature of the pouch battery cell to be sampled may be sampled. Also, the second protrusion 2095 is disposed with a plurality of through holes, and the through hole exposes the temperature sampling terminal 205 disposed on the first protrusion 2014.

Please refer to FIG. 12 to FIG. 16. In another embodiment of the disclosure, when installing the flexible circuit board assembly 200, the plurality of sampling pieces 202 are welded on a side of the flexible printed circuit board 201, and the second connector 203 is assembled on the fixing portion 2012 of the flexible printed circuit board 201, and then the first hot pressing film 2091 and the second hot pressing film 2092 are pressed together with the flexible printed circuit board 201 and the sampling pieces 202. Also, the sampling piece 202 is bent to form the vertical portion 2021 on each sampling piece 202. In addition, the hot pressing film 209 is fixed to the upper surface of the battery cell stack 102 by the backside adhesive. The other end of the sampling piece 202 exposed by the hot pressing film 209 is welded to the electrode tab of each pouch battery cell on the battery cell stack 102. Finally, the fixing portion 2012 of the flexible printed circuit board 201 is clamped through the opening on the side plate, and the second connector 203 on the fixing portion 2012 is engaged with the buckle 107 on the side plate.

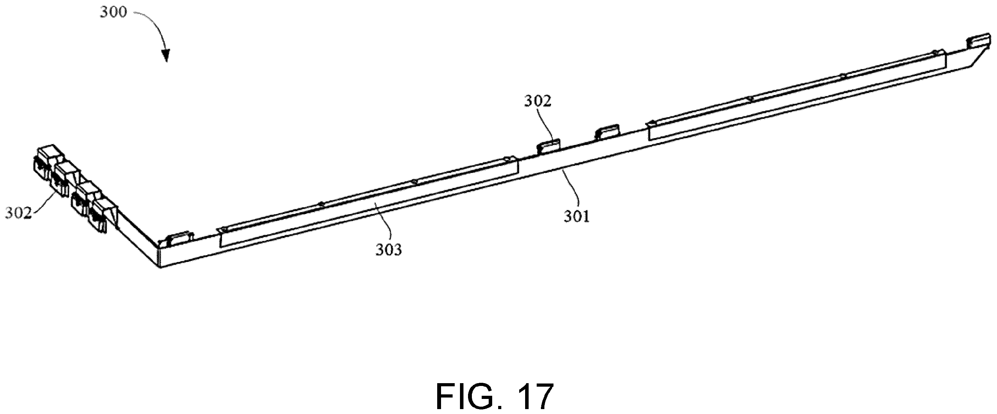

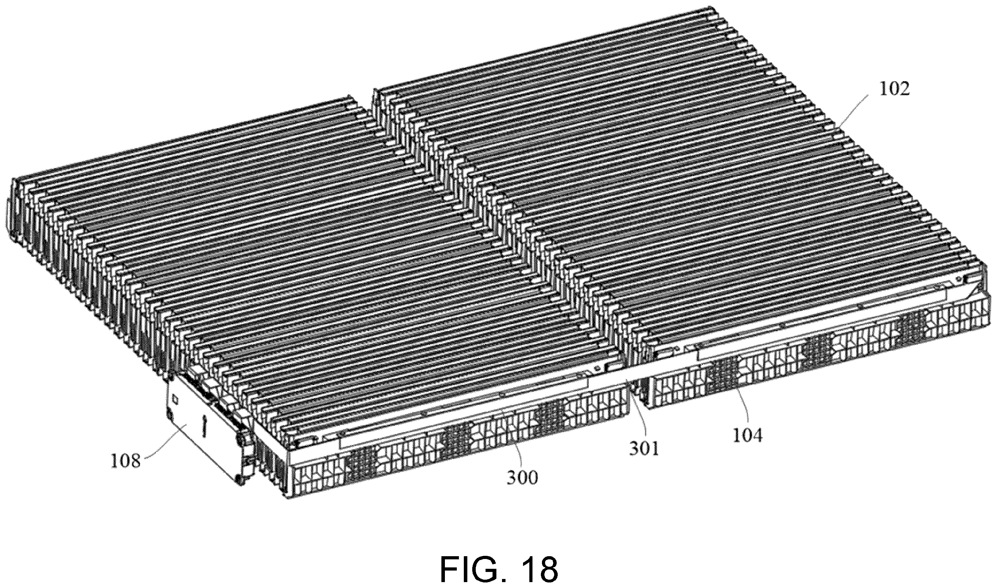

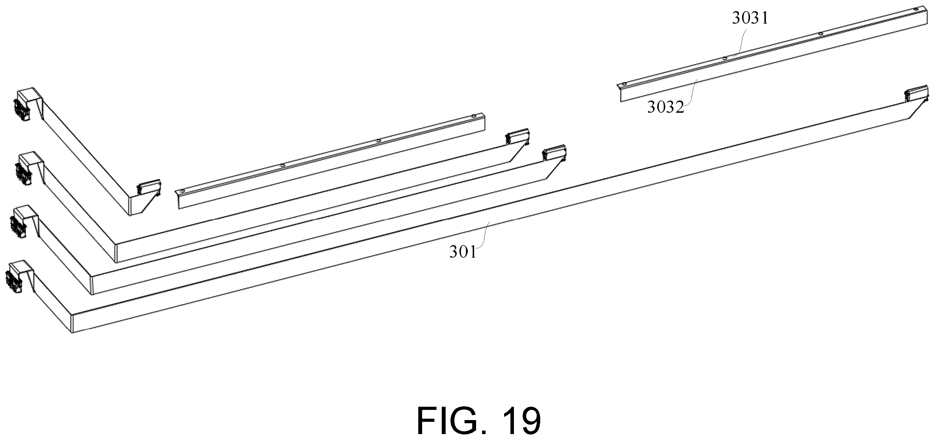

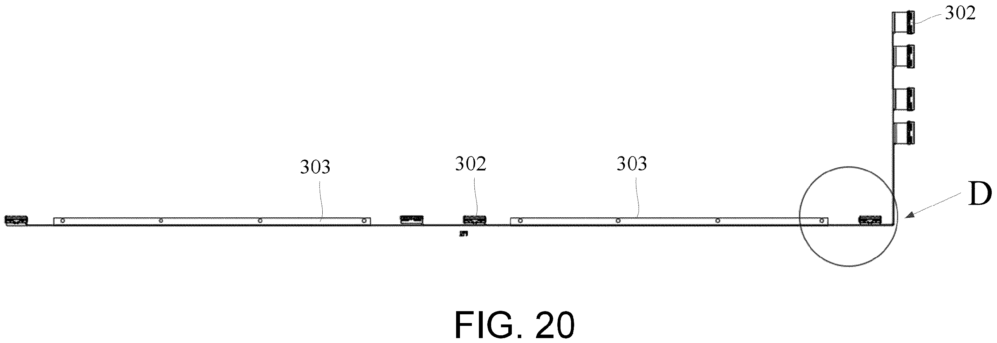

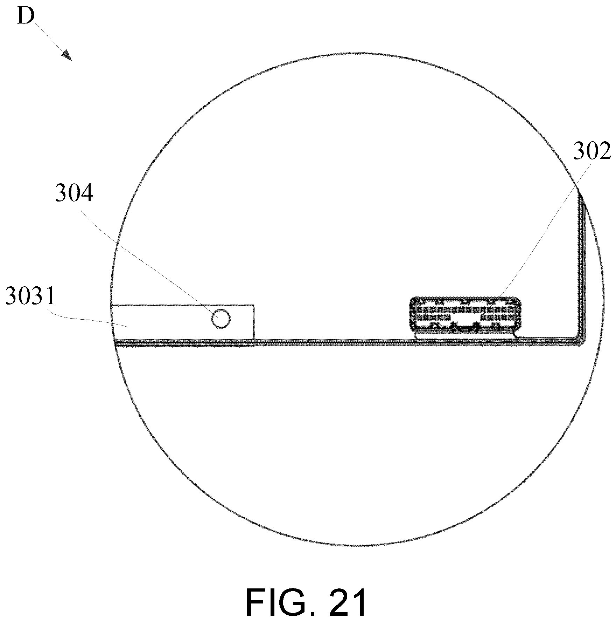

Please refer to FIG. 17 to FIG. 21 together with FIG. 1 and FIG. 4. In an embodiment of the disclosure, the battery pack further includes: a connecting assembly 300, the battery management system 108, and the side plate 104. The flexible printed circuit board 201 is communicatively connected to the battery management system 108 through the connecting assembly 300, the side plate 104 is fixed to the side surface of the battery cell stack 102, and the connecting assembly 300 is connected and fixed to the side plate 104. The connecting assembly 300 includes: at least one flexible flat cable 301 and an adapter 303, which is a thin sheet structure with a fixed connection function. The flexible flat cable 301 is disposed on the side surface of the battery cell stack 102 and is connected and fixed to the side plate 104 through the adapter 303, that is, the flexible flat cable 301 is disposed corresponding to the side surface of the battery cell stack 102. That is, the connecting assembly 300 is further provided, an end of the connecting assembly 300 is electrically connected to the second connector 203 of the flexible printed circuit board 201, and another end thereof is connected to the battery management system 108, so as to realize signal transmission. In the embodiment, the connecting assembly 300 includes the flexible flat cable 301, the first connector 302, and the adapter 303, and the flexible flat cable 301 is fixed on the side plate 104 through the adapter 303.

Please refer to FIG. 4, FIG. 17, and FIG. 18. In an embodiment of the disclosure, two ends of the flexible flat cable 301 are connected to the first connector 302, that is, both the two ends of the flexible flat cable 301 are connected to the first connector 302, the first connector 302 at one of the two ends of the flexible flat cable 301 is connected to the second connector 203 on the flexible printed circuit board 201, and the first connector 302 at the other end of the flexible flat cable 301 is electrically connected to the battery management system 108. In an embodiment, the connecting assembly comprises a plurality of flexible flat cables 301, and the quantity of the flexible flat cables 301 is equal to the quantity of the flexible printed circuit boards 201; in the embodiment, the battery pack includes the first battery cell stack and the second battery cell stack, one of the electrode tab sides of the first battery cell stack faces one of the electrode tab sides of the second battery cell stack, the battery management system 108 is located on the other electrode tab side of the first battery cell stack facing away from the second battery cell stack, an end of each of the flexible flat cables 301 is connected to the corresponding flexible printed circuit board 201, and another end of each of the flexible flat cables 301 extends across the side surface of the first battery cell stack and/or the side surface of the second battery cell stack and is electrically connected to the same battery management system 108. In this embodiment, it is necessary to transmit the signals of the four flexible printed circuit boards 201 in each battery pack, so four flexible flat cables 301 are disposed, for example. The length and folding method of each of the flexible flat cables 301 may be determined according to the actual needs, in which the first connectors 302 on the plurality of flexible flat cables 301 are staggered in an extending direction of the flexible flat cables 301. In this embodiment, each of the flexible flat cables 301 is disposed corresponding to the side surface of the battery stack 102, and extends from the second connector 203 on the flexible printed circuit board 201 to the battery management system 108 along the side of the battery stack 102, that is, an end of each of the flexible flat cables 301 is connected to the second connector 203 on the corresponding flexible printed circuit board 201, and another end of each of the flexible flat cables 301 extends to the battery management system 108. In the repeated path, the plurality of flexible flat cables 301 are overlapped, that is, at least a portion of the plurality of flexible flat cables 301 are disposed in a stacking manner and connected and fixed to the side plate 104 through the same adapter 303; specifically, the plurality of flexible flat cables 301 are stacked on the same path.

Please refer to FIG. 17, FIG. 19, FIG. 20, and FIG. 21. In an embodiment of the disclosure, the adapter 303 includes a first connecting surface 3031 and a second connecting surface 3032, and the first connecting surface 3031 and the second connecting surface 3032 are arranged at a preset angle. During the installation, the first connecting surface 3031 overlaps the side plate 104 and is fixed by a fixing member 304, that is, the first connecting surface 3031 may be fixed and connected to the side plate 104; the second connecting surface 3032 is fixed and connected to the flexible flat cable 301 through the backside adhesive, that is, the second connecting surface 3032 may be fixed and connected to the flexible flat cable 301. In this embodiment, the first connecting surface 3031 and the second connecting surface 3032 are disposed at a right angle, for example. The fixing member 304 may be, for example, a rivet or other fixing members.

Please refer to FIG. 1 and FIG. 17 to FIG. 21. In an embodiment of the disclosure, when installing the connecting assembly 300, the first connector 302 at the two ends of each of the flexible flat cables may be connected to the corresponding second connector 203 and the battery management system. Next, multiple layers of the flexible flat cables 301 are overlapped, and adjacent flexible flat cables 301 are fixed by the backside adhesive. That is, two adjacent layers of the flexible flat cables 301 may be fixed to each other by the backside adhesive, so that the multiple layers of the flexible flat cables 301 form a whole. Finally, the adapter 303 is installed, the second connecting surface 3032 of the adapter 303 is fixed to each of the flexible flat cables 301 through the backside adhesive, then the first connecting surface 3031 of the adapter 303 is overlapped on the side plate, and the first connecting surface 3031 is fixed to the side plate 104 by using, for example, the fixing member.

In summary, the disclosure provides the battery pack including the lower case, the battery cell stack disposed in the lower case, the flexible printed circuit boards disposed on the two sides of each battery cell stack, the connecting assembly including the flexible flat cable, the plastic piece or the hot pressing film for fixing the flexible printed circuit board, and the fixing plate for fixing the temperature sampling terminal. The battery pack provided in the disclosure does not require a separate support structure for, for example, the flexible printed circuit board, which can improve the volume utilization and energy density of the battery pack.

The above description is only preferred embodiments of the disclosure and an explanation of the technical principles used. Persons skilled in the art should understand that the scope involved in the disclosure is not limited to the technical solution formed by a specific combination of the above technical features, and should also cover other technical solutions formed by any combination of the above-mentioned technical features or the equivalent features thereof without departing from the concept of the disclosure, such as a technical solution formed by replacing the above-mentioned features with (but not limited to) technical features with similar functions disclosed in the disclosure.

## Claims

1. A battery pack, comprising:
a casing, wherein the casing comprises a lower case (101);
a battery cell stack (102), wherein the battery cell stack (102) comprises a plurality of pouch battery cells and comprises two electrode tab sides opposite to each other and side surfaces adjacent to the electrode tab sides, and the battery cell stack (102) is disposed in the lower case (101);
a thermally conductive structural adhesive, wherein the battery cell stack (102) and a base plate of the lower case (101) are directly bonded and fixed by the thermally conductive structural adhesive;
a foaming adhesive (105), wherein the foaming adhesive (105) is filled and connected between the electrode tab side of the battery cell stack (102) and the lower case (101);
a battery management system (108);
a flexible circuit board assembly (200), wherein the flexible circuit board assembly (200) comprises a flexible printed circuit board (201);
a side plate (104), wherein the side plate (104) is fixed to the side surface of the battery cell stack (102);
a connecting assembly (300), wherein the battery management system (108) and the flexible printed circuit board (201) are communicatively connected through the connecting assembly (300), and the connecting assembly (300) comprises: at least one flexible flat cable (301) and an adapter (303), wherein the at least one flexible flat cable (301) is disposed on the side surface of the battery cell stack (102) and is connected and fixed to the side plate (104) through the adapter (303).

2. The battery pack according to claim 1, wherein the at least one flexible flat cable (301) comprises a plurality of flexible flat cables (301), a quantity of the at least one flexible flat cable (301) is equal to a quantity of the flexible printed circuit boards (201), and at least a portion of the plurality of flexible flat cables (301) are disposed in a stacking manner and connected and fixed to the side plate (104) through the same adapter (303).

3. The battery pack according to claim 2, wherein two adjacent layers of the flexible flat cables (301) are fixed to each other by a backside adhesive.

4. The battery pack according to claim 1, wherein the at least one flexible flat cable (301) is disposed corresponding to the side surface of the battery cell stack (102); the adapter (303) comprises a first connecting surface (3031) and a second connecting surface (3032), the first connecting surface (3031) is fixedly connected to the side plate (104), and the second connecting surface (3032) is fixedly connected to the at least one flexible flat cable (301).

5. The battery pack according to claim 4, wherein the first connecting surface (3031) is overlapped on the side plate (104) and fixed to the side plate (104) by a fixing member; and the second connecting surface (3032) is fixed to the at least one flexible flat cable (301) by a backside adhesive.

6. The battery pack according to claim 2, wherein the connecting assembly (300) further comprises first connectors (302), two ends of each of the flexible flat cables (301) are connected to the first connectors (302), one of the first connectors (302) at one of the two ends of each of the flexible flat cables (301) is connected to the flexible printed circuit board (201), and another one of the first connectors (302) at the other end of each of the flexible flat cables (301) is electrically connected to the battery management system (108).

7. The battery pack according to claim 6, wherein the flexible circuit board assembly (200) further comprises a second connector (203), and the flexible printed circuit board (201) is connected to the first connector (302) through the second connector (203).

8. The battery pack according to claim 7, wherein the flexible printed circuit board (201) comprises a flexible printed circuit board body (2011), two ends of the flexible printed circuit board body (2011) are bent in same direction to form fixing portions (2012) clamped on the side plate (104), and the second connector (203) is disposed on the fixing portions (2012) and connected to the corresponding first connector (302).

9. The battery pack according to claim 7, wherein an end of each of the flexible flat cables (301) is connected to the second connector (203) on the corresponding flexible printed circuit board (201), another end of each of the flexible flat cables (301) extends to the battery management system (108), and the plurality of the flexible flat cables (301) are disposed on same path in a stacking manner.

10. The battery pack according to any one of claims 6 to 9, wherein the first connectors (302) on the plurality of flexible flat cables (301) are staggered in an extending direction of the flexible flat cables (301).

11. The battery pack according to claim 2, wherein the battery pack comprises a first battery cell stack (102) and a second battery cell stack (102), one of electrode tab sides of the first battery cell stack (102) faces one of electrode tab sides of the second battery cell stack (102), the battery management system (108) is located on another electrode tab side of the first battery cell stack (102) facing away from the second battery cell stack (102), an end of each of the plurality of flexible flat cables (301) is connected to the corresponding flexible printed circuit board (201), and another end of each of the plurality of flexible flat cables (301) extends across a side surface of the first battery cell stack (102) and/or a side surface of the second battery cell stack (102) and is electrically connected to the same battery management system (108).
